# EUROPEAN PATENT SPECIFICATION

(11) **EP 0 521 033 B1**
(45) Date of publication and mention of the grant of the patent: **20.01.1999**
(21) Application number: 91906029.3
(22) Date of filing: 19.03.1991
(51) Int. Cl.: B03C 3/28

(54) **FILTER**
FILTER
FILTRE

(30) Priority: 19.03.1990 GB 9006146
(43) Date of publication of application: 07.01.1993
(73) Proprietor: INTERFILTA LIMITED, GB-Burnley Lancashire BB11 5SY (GB)
(72) Inventor: HOPPITT, Bernard, Interfilta Limited, Burnley, Lancashire BB11 5SY (GB); ENGVALL, BO, S-512 01 Svenljunga (SE)
(74) Representative: Shaw, Laurence
(86) International application number: GB9100423
(87) International publication number: WO9114503

(56) References cited:
- EP-A- 0 038 743
- GB-A- 2 048 110
- US-A- 4 376 642
- US-A- 4 880 448

## Description

The invention relates to a filter and in particular to one including a filter material having electrostatic properties

It has been observed that with time the electrostatic properties of a filter material having such properties tends to deteriorate. It has been proposed to locate a second finer filter medium downstream of the electrostatic filter material to ensure that the filter continues to function even when the filtering properties of the electrostatic filter material fall away. It has now been discovered that if a filter medium is located upstream of the electrostatic filter material the electrostatic properties tend to be maintained.

According to the invention in one aspect there is provided a filter for filtration of submicron and lower micron particle dust from dust-containing atmosphere, the filter comprising a layer of material having electrostatic charge and a layer of filter medium without electrostatic charge located upstream of the air flow **characterised in that** the layer of filter medium is lofted and comprises bonded bi-component fibres making up the filter medium to entrap a significant number of particles and isolate them from the layer of material having electrostatic charge whereby the upstream filter medium, in use, increases in efficiency and compensates for any reduction of the electrostatic effect of the layer so that the efficiency of the filter is prolonged, and wherein the filter material having electrostatical charge comprises one or more of the following blends: clean polyolefine fibres and clean fibres of an addition polymer comprising one or more halogen-substituted hydrocarbons; polypropylene and cellulose diacetate; polypropylene and stainless steel; polypropylene and cotton; polypropylene and silk; and polypropylene and wool; Nylon and polypropylene; and polypropylene and polyethylene.

While we do not wish the scope of the invention to be limited by the following theory, our studies suggest that the deterioration in electrostatic effect is contributed to by the entrapment of loose particles in the sub-micron and lower micron ranges in the electrostatic filter material and that if a significant number of such particles can be isolated from that filter material the electrostatic effect will remain substantially constant. The presence of the filter medium upstream in the air flow entraps particles which could contribute to the deterioration.

Thus the upstream filter medium is constructed in such a manner that it increases in efficiency during or throughout its life. The rate of increase is arranged such that should there be any eventual reduction in the electrostatic properties of the electrostatically charged material, this will be covered or compensated by the increase in the mechanical collection efficiency of the upstream medium to the point where no loss in overall efficiency of the filter occurs.

The filter material having electrostatic properties may be a felt and is selected from the following blends. Clean polyolefine fibres and clean fibres of an addition polymer comprising one or more halogen-substituted hydrocarbons, (such blends are described and claimed in GB patent 2190689, the entire disclosure of which is to be incorporated herein merely by this reference); polypropylene and cellulose diacetate; polypropylene and stainless steel; polypropylene and cotton; polypropylene and silk; and polypropylene and wool; Nylon and polypropylene; and polypropylene and polyethylene.

The filter medium without electrostatic properties may be any such medium having the ability to capture dust or like particles in the determined range. The filter medium may be formed in known manner and of known materials; typically it will be formed of a blend of fibres; e.g. synthetic fibres. In an example a prefilter layer was manufactured utilising polyester/polyamide/polypropylene fibre carded to form a fleece, but without any electrostatic charge and the material had a density of approx. 110-160g/m². The filter medium will tend to provide mechanical support to the electrostatic filter material if the two are in close side-by-side relation.

According to the invention in another aspect there is provided a method of filtering submicron and lower micron size dust from a dust containing atmosphere, the method comprising passing the atmosphere through a filter comprising a filter material having electrostatic charge and a filter medium without electrostatic charge, the filter material having electrostatic charge comprising one or more of the following blends: clean polyolefine fibres and clean fibres of an addition polymer comprising one or more halogen-substituted hydrocarbons; polypropylene and cellulose diacetate; polypropylene and stainless steel; polypropylene and cotton; polypropylene and silk; and polypropylene and wool; Nylon and polypropylene; and polypropylene and polyethylene, the medium being located upstream of the filter material and being lofted and comprising bonded bicomponent fibres making up the filter medium to entrap a significant number of particles and isolate them from the layer of material having electrostatic charge whereby the upstream filter medium, in use, increases in efficiency and compensates for any reduction of the electrostatic effect of the layer so that the efficiency of the filter is prolonged.

A filter of the invention may be used in a wide variety of industrial applications such as air conditioning units, suction cleaners, helmets, respirators and so on.

In order that the invention may be well understood it will now be described by way of illustration with reference to the following example and the graphs of the accompanying drawing. Parts are by weight unless otherwise specified.

### Examples

Clean crimped polypropylene fibre and clean crimped modacrylic fibre were mixed together. An electrocet filter material was produced by a process in which the mixture was carded to form a fleece until the fibres acquired an electric charge. The fleece was needled to form a felt, which was the electrostatic filter material. The felt was 7-10 mm thick and had a density of about 100-223 g/m².

A prefilter layer was manufactured by carding polyester/polyamide/polypropylene fibre carded to form a fleece, but without any electrostatic charge. The fleece was cross laid and then processed in a curing oven to bond the interstices between the fibres together, producing a lofted pre-filter material having a density greater than about 110 g/m², e.g. of approximately 130-140 g/m².

The preferred process utilises bi-component fibres including high and low melt temperature components such that the low melt temperature fibres become tacky in the curing oven, so bonding the fibres together their interstices. In alternative processes a bonding agent may be applied as a liquid spray or a powder dusting.

The prefilter and the electrostatic filter material were laid alongside each other and the multi-layer product was mounted in a filter apparatus therefor, the prefilter being towards the inlet or upstream end, to form a filter embodying the invention. The layers may additionally be physically bonded together by needling or other methods of bonding.

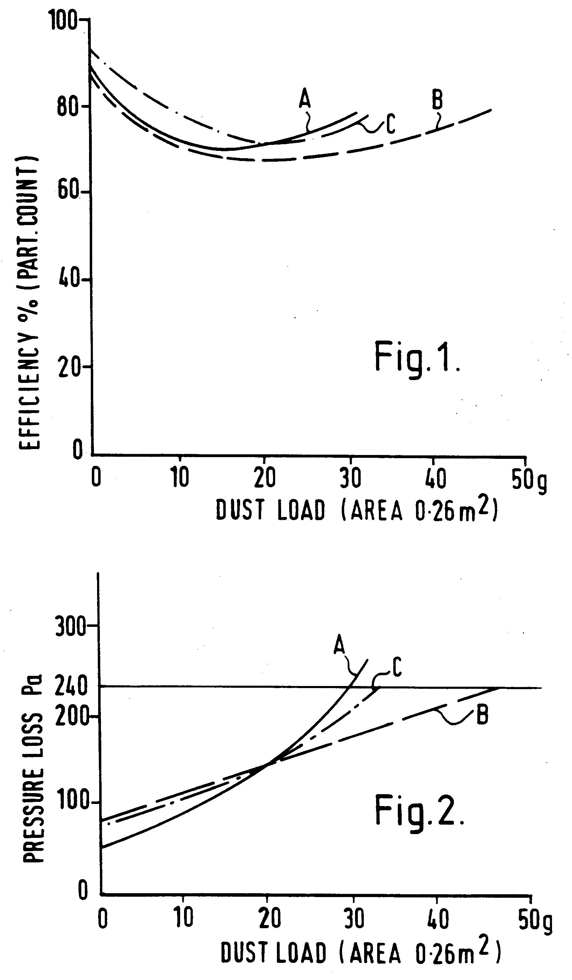

In an evaluation, different filters were subjected to the ASHRAE test to measure efficiency. ASHRAE stands for "American Society of Heating Refrigeration and Air Conditioning Engineers. Equivalent tests are specified by BS 6340 and Eurovent No. 4/5. The results are shown in the drawings in which the results for the electrostatic filter material with a backing downstream of the dust flow are shown in curves labelled A; the results for the filter assembly prepared above, i.e. prefilter/ electrostatic filter material backing, are shown in the curves labelled B; and the results for an arrangement in which electrostatic filter material is upstream of the prefilter/backing are shown in curves labelled C. Thus, the load of dust taken up by the different filters for an area of 0.26m² under a velocity of 0.5m/s was measured and the results are shown in the graph of Figure 1 of the accompanying drawing. The dust holding capacity was also determined for a final pressure difference of 240Pa, and the results are shown in the graph of Figure 2. These results show that when the electrostatic filter material is used alone the dust load and holding capacity fall away relatively rapidly; when the prefilter medium is located downstream of the electrostatic filter material there is only slight improvement, but when the prefilter is present in accordance with the teachings of this invention there is a dramatic improvement in both properties.

In another example melt-blown fibres or other fine fibres were formed into a dense matrix and bonded to a spun media backing. On the melt-blown, or other fine fibre matrix the electrocet material then the pre-filter layer from the above example were laid. The layers are then needled, sewn or bonded together and formed into a filter, for example a bag, pad, or a pleated cassette.

In another example the polypropylene fibre and modacrylic fibre were not crimped, in contrast to the examples described above, to provide a denser matrix.

## Claims

1. A filter for filtration of submicron and lower micron particle dust from dust-containing atmosphere, the filter comprising a layer of material having electrostatic charge and a layer of filter medium without electrostatic charge located upstream of the air flow **characterised in that** the layer of filter medium is lofted and comprises bonded bi-component fibres making up the filter medium to entrap a significant number of particles and isolate them from the layer of material having electrostatic charge whereby the upstream filter medium, in use, increases in efficiency and compensates for any reduction of the electrostatic effect of the layer so that the efficiency of the filter is prolonged, and wherein the filter material having electrostatical charge comprises one or more of the following blends: clean polyolefine fibres and clean fibres of an addition polymer comprising one or more halogen-substituted hydrocarbons; polypropylene and cellulose diacetate; polypropylene and stainless steel; polypropylene and cotton; polypropylene and silk; and polypropylene and wool; Nylon and polypropylene; and polypropylene and polyethylene.

2. A filter means according to Claim 1, wherein the filter medium without electrostatic charge comprises polyester/polyamide/polypropylene or other fibre carded to form a fleece having no electrostatic charge and to a density of approximately 100-160g/m2.

3. A filter according to Claim 1 or 2, including a further layer of a filter medium without electrostatic charge located, in use, downstream of the electrostatically charged material.

4. A filter according to Claim 3, wherein the further layer comprises a dense matrix of melt-blown fibres or other fine fibres.

5. A filter means according to Claim 4, wherein the matrix of melt-blown or other fine fibres is bonded to a spun media backing.

6. A method of filtering submicron and lower micron size dust from a dust containing atmosphere, the method comprising passing the atmosphere through a filter comprising a filter material having electrostatic charge and a filter medium without electrostatic charge, the filter material having electrostatic charge comprising one or more of the following blends: clean polyolefine fibres and clean fibres of an addition polymer comprising one or more halogen-substituted hydrocarbons; polypropylene and cellulose diacetate; polypropylene and stainless steel; polypropylene and cotton; polypropylene and silk; and polypropylene and wool; Nylon and polypropylene; and polypropylene and polyethylene, the medium being located upstream of the filter material and being lofted and comprising bonded bicomponent fibres making up the filter medium to entrap a significant number of particles and isolate them from the layer of material having electrostatic charge whereby the upstream filter medium, in use, increases in efficiency and compensates for any reduction of the electrostatic effect of the layer so that the efficiency of the filter is prolonged.

## Patentansprüche

1. Ein Filter zum Filtern von Staub, bestehend aus Partikeln, deren Größe im Submikronbereich bzw. im Bereich weniger Mikrometer liegt, aus staubhaltiger Atmosphäre, wobei das Filter eine Schicht mit elektrisch geladenem Material und eine Schicht eines Filtermediums ohne elektrischer Ladung aufweist, welche bezüglich des Luftstromes stromaufwärts angeordnet ist,
**dadurch gekennzeichnet**,
daß die Schicht des Filtermediums angehoben ist (lofted) und verbundene zweikomponentige Fasern enthält, die das Filtermedium bilden, um einen großen Teil der Partikel abzufangen und von der Schicht mit dem elektrostatisch geladenen Material fernzuhalten, wobei die Wirksamkeit des stromaufwärts angeordneten Filtermediums im Betrieb zunimmt und eine Abnahme der elektrostatischen Wirkung der geladenen Schicht kompensiert, so daß die Wirksamkeit des Filters verlängert wird, wobei das Filtermaterial mit elektrostatischer Ladung aus einer oder mehrerer der folgenden Mischungen besteht: reine Polyolefinfasern und reine Fasern aus einem Additionspolymer, welches eines oder mehrere halogen-substituierte Hydrogencarbonate aufweist; Polypropylen und Zellulosediacetat; Polypropylen und rostfreier Stahl; Polypropylen und Baumwolle; Polypropylen und Seide; Polypropylen und Wolle; Nylon und Polypropylen; und Polypropylen und Polyethylen.

2. Eine Filtervorrichtung nach Anspruch 1, wobei das Filtermedium ohne elektrostatische Ladung Polyester-, Polyamid-, Polypropylenfasern oder andere Fasern aufweist, welche zur Ausbildung eines Vlieses ohne elektrostatischer Ladung mit einer Dichte von etwa 100 - 160 g/m² kardiert werden.

3. Filter nach Anspruch 1 oder 2, welches eine weitere Schicht eines Filtermediums ohne elektrostatischer Ladung umfaßt, welche in Betrieb bezüglich des elektrostatisch geladenen Materiales stromabwärts angebracht ist.

4. Filter nach Anspruch 3, wobei die Zusätzliche Schicht eine dichte Matrix aus schmelzgeblasenen (melt-blown) Fasern oder anderen feinen Fasern aufweist.

5. Filtervorrichtung nach Anspruch 4, wobei die Matrix aus schmelzgeblasenen (melt-blown) oder anderen feinen Fasern mit einem Träger aus gesponnenem Stoff verbunden ist.

6. Verfahren zum Filtern von Staub dessen Größe weniger als einen Mikrometer bis wenige Mikrometer beträgt, aus einer staubhaltigen Atmosphäre, wobei die Atmosphäre durch einen Filter geleitet wird, welches ein Filtermaterial mit elektrostatischer Ladung und ein Filtermedium ohne elektrostatischer Ladung besitzt, wobei das Filtermaterial mit elektrostatischer Ladung eine oder mehrere der folgenden Mischungen aufweist: reine Polyolefinfasern und reine Fasern aus einem Additionspolymer, welches eine oder mehrere halogensubstituierte Hydrocarbonate aufweist; Polypropylen und Zellulosediacetat; Polypropylen und rostfreier Stahl; Polypropylen und Baumwolle; Polypropylen und Seide; und Polypropylen und Wolle; Nylon und Polypropylen; und Polypropylen und Polyethylen, wobei das Filtermedium bezüglich des Filtermaterials stromaufwärts angeordnet ist, angehoben ist (lofted) und verbundene zweikomponentige Fasern enthält, welche das Filtermedium bilden, um einen großen Teil der Partikel abzufangen und von der elektrostatisch geladenen Schicht fernzuhalten, wobei das stromaufwärts angeordnete Filtermedium während des Betriebes seine Wirkung steigert und eine Verminderung der Wirksamkeit der elektrostatisch geladenen Schicht kompensiert, so daß die Wirksamkeit des Filters verlängert wird.

## Revendications

1. Filtre destiné à la filtration de particules de poussière de l'ordre du sous-micron et inférieures au micron dans une atmosphère contenant de la poussière, le filtre comprenant une couche de matériau ayant une charge thermostatique et une couche de support de filtre sans charge électrostatique située en amont du flux d'air, caractérisé en ce que la couche de support de filtre est gonflée et comprend des fibres biconstituant agglomérées réalisant le support de filtre pour piéger un nombre important de particules et les isoler de la couche de matériau ayant une charge électrostatique, moyennant quoi le support de filtre en amont, en service, voit son efficacité augmenter et compense toute réduction de l'effet électrostatique de la couche, de telle sorte que l'efficacité du filtre est prolongée, et dans lequel le matériau de filtre ayant une charge électrostatique comprend un ou plusieurs des mélanges suivants : fibres en polyoléfine propres et fibres propres d'un polymère additionnel comprenant un ou plusieurs hydrocarbures halogéno-substitués ; du polypropylène et du diacétate de cellulose ; du polypropylène et de l'acier inoxydable ; du polypropylène et du coton ; du polypropylène et de la soie et du polypropylène et de la laine ; du nylon et du polypropylène et du polypropylène et du polyéthylène.

2. Moyens de filtre selon la revendication 1, dans lesquels le support de filtre sans charge électrostatique comprend du polyester/polyamide/polypropylène ou tout autre fibre cardée pour former une nappe dépourvue de charge électrostatique et jusqu'à une densité de 100 à 160 g/m² environ.

3. Filtre selon la revendication 1 ou 2, comprenant une autre couche d'un support de filtre sans charge électrostatique située, en service, en aval du matériau chargé électrostatiquement.

4. Filtre selon la revendication 3, dans lequel l'autre couche comprend une matrice dense de fibres soufflées ou d'autres fibres fines.

5. Moyens de filtre selon la revendication 4, dans lesquels la matrice de fibres soufflées ou d'autres fibres fines est liée à un support filé.

6. Procédé de filtrage de poussière de la taille du sous-micron et inférieure au micron dans une atmosphère contenant de la poussière, le procédé comprenant le passage de l'atmosphère dans un filtre comprenant un matériau de filtre ayant une charge électrostatique et un support de filtre sans charge électrostatique, le matériau de filtre ayant une charge électrostatique comprenant un ou plusieurs des mélanges suivants : des fibres de polyoléfine propres, et des fibres propres d'un polymère additionnel comprenant un ou plusieurs hydrocarbures halogéno-substitués ; du polypropylène et du diacétate de cellulose ; du polypropylène et de l'acier inoxydable ; du polypropylène et du coton ; du polypropylène et de la soie et du polypropylène et de la laine ; du nylon et du polypropylène et du polypropylène et du polyéthylène, le support étant situé en amont du matériau de filtre et étant gonflé et comprennent des fibres biconstituant agglomérées formant le support de filtre pour piéger un nombre important de particules et les isoler de la couche de matériau ayant une charge électrostatique, moyennant quoi le support de filtre en amont, en service, voit son efficacité augmenter et compense toute réduction de l'effet électrostatique de la couche de telle sorte que l'efficacité du filtre soit prolongée.
